(19) **Europäisches Patentamt**
**European Patent Office**
**Office européen des brevets**

(11) **EP 4 637 151 A1**

(12) **EUROPEAN PATENT APPLICATION**

(43) Date of publication:
**22.10.2025 Bulletin 2025/43**

(21) Application number: **24290010.8**

(22) Date of filing: **15.04.2024**

(51) International Patent Classification (IPC):
*H04N 19/30* (2014.01)   *H04N 19/40* (2014.01)
*H04N 19/426* (2014.01)   *H04N 19/59* (2014.01)
*H04N 19/91* (2014.01)

(52) Cooperative Patent Classification (CPC):
**H04N 19/30; H04N 19/40; H04N 19/428;
H04N 19/59; H04N 19/91**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MK Systems USA Inc.
Wilmington, DE 19808 (US)**

(72) Inventors:
• **Le Tanou, Julien
Wilmington, 19808 (US)**
• **Ropert, Michael
Wilmington, 19808 (US)**

(74) Representative: **Haseltine Lake Kempner LLP
One Portwall Square
Portwall Lane
Bristol BS1 6BH (GB)**

(54) **METHODS, SYSTEMS, AND DEVICES FOR JOINT MULTI-VIDEO PROFILE CODING AND DELIVERY**

(57) Embodiments described herein relate to methods, systems, devices, and computer readable media for joint multi-video profile coding and delivery for Adaptive Bitrate video streaming that Involve repurposing dependent video of encoded reference layer video using Predictive Residual Coding (PRC) with Partial decoding using spatial residual domain reference samples (PRC-Part-TQ), and inverse repurposing the coded video data to generate a video package for delivery. Embodiments described herein can implement Conditional Delta Residual (CDR) coding and signaling. Embodiments described herein can implement Rate-Distortion Optimization based on Delta Residuals (RDODR). Embodiments described herein can involve a new coding format, R-D optimizations and associated transcoding processes for joint multi-profile coding and delivery.

**FIG. 1**

Processed by Luminess, 75001 PARIS (FR)

## Description

### FIELD

The improvements generally relate to the field of video streaming. In particular, the Improvements relate to encoding and delivery for video streaming.

### INTRODUCTION

A delivery system can process and/or encode video content and can store the same content in different (bitrate, resolution) pairs, which defines a set of encoding profiles or coded representations (i.e. bitrate ladder), to serve and adapt the video content to various end-user bandwidth requirements and device capabilities.

Embodiments described herein relate to methods, systems and devices for encoding and delivery for Adaptive Bitrate (ABR) video streaming. Embodiments described herein relate to methods and systems for a joint multi-profile coding format with corresponding transcoding. Embodiments described herein can improve trade-offs between the storage bit-cost of the different representations, the transcoding complexity and transmission efficiency (i.e. bitrate-quality trade-off at transmission) of the requested representation by the end-client while considering that the delivered output bitstream should remain compliant with the legacy decoding system available at the client.

### SUMMARY

In accordance with an aspect, there is provided a method for joint multi-video profile coding and delivery for Adaptive Bitrate video streaming. The method involves: repurposing a dependent layer video of an encoded reference layer video by Predictive Residual Coding (PRC) with Partial decoding using spatial residual domain reference samples (PRC-Part-TQ); storing coded video data; and Inverse repurposing the coded video data to generate a standard independent video stream for delivery at a requested bitrate.

In some embodiments, the reference layer video Is a video representation of high quality and resolution and the dependent layer video is a video representation of any quality and resolution lower than the reference layer video.

In some embodiments, the method involves using spatial residual samples from a reference high quality video to generate a residual predictor of dependent lower quality video for the Predictive Residual Coding (PRC).

In some embodiments, the method involves generating a residual predictor for the dependent layer video by Inverse transforming and Inverse quantizing a transformed quantized residual Image of the reference layer video to obtain a spatial residual image. In some embodiments, the method also Involves resealing the spatial (i.e. Inversed-transformed and inversed-quantized) residual image of the reference layer video to the resolution of the dependent video and storing in a buffer. In some embodiments, the method involves, for each coding unit of the dependent layer video, before entropy encoding, transforming and quantizing a corresponding position and area in a spatial residual image of the reference layer video, using a transform type and quantization parameter of the respective coding unit, to obtain a transformed quantized residual predictor to further subtract to a transformed quantized residue of the respective coding unit of the dependent video layer and to obtain a delta residue for the respective coding unit. In some embodiments, the method involves entropy encoding the delta residue to generate a dependent video stream.

In some embodiments, inverse repurposing the coded video data involves entropy decoding transformed quantized residual coefficients from a reference standard video stream of the reference layer video, and inverse quantizing coefficients and inverse transforming coefficients to obtain a residual image for rescaling to match resolution of the dependent layer video represented by a dependent video stream.

In some embodiments, inverse repurposing the coded video data involves entropy decoding delta residual coefficients from the dependent video stream.

In some embodiments, the method Involves, for each coding unit of a dependent video stream, transforming and quantizing a collocated area in the spatial residual image, using a transform type and quantization parameter of the respective coding unit, to obtain a transformed quantized residual predictor to further add to a delta residue of the respective coding unit to obtain an original transformed quantized residue for the respective coding unit to transcode.

In some embodiments, the method Involves entropy encoding, for each coding unit of a dependent video stream, the original transformed quantized residue and associated coding unit syntax to obtain a standard independent stream. In some embodiments, a standard stream means decodable by any video compression standard under consideration for final end-client delivery and decoding (at end-client player) (e.g. H.264/AVC, HEVC, WC, VP8, V9, AV1 etc.) That is, a standard stream can refer to any compressed format decodable by the end-device and deployed. For example, the standard stream may be based on video compression standards (such as 264/AVC, HEVC, WC, VP6, V9, AV1 etc.).

In some embodiments, the method involves conditional delta residual coding and signaling by, for all coding units In a group of pictures, calculating and coding a delta residual of the dependent layer video using a residual predictor.

In some embodiments, the method involves, for each coding unit, coding an inter-layer delta residual only if the coding lowers a residue energy, and adding and coding a flag indicating if the coding unit is inter-layer predicted.

In some embodiments, the method involves using a delta residual bit-cost for the rate estimations to favor prediction and splitting modes that minimize a delta residual to code for the dependent layer video.

In accordance with another aspect, there Is provided a server system for multi-video profile coding and delivery for Adaptive Bitrate video streaming. The system has: one or more processors to repurpose a dependent video of an encoded reference layer video by Predictive Residual Coding (PRC) with Partial decoding using spatial residual domain reference samples (PRC-Part-TQ), and inverse repurpose the coded video data to generate a standard Independent video stream for delivery, and one or more memories storing coded video data.

In accordance with another aspect, there is provided a method for conditional delta residual coding and signaling for Inter-layer Predictive Residual Coding (PRC) in the context of multi-profile video coding and delivery. The method can involve: repurposing a dependent layer video using an encoded reference layer video; for all coding units in a group of pictures of a video stream, Introducing a condition for coding a delta residual of the dependent layer video with associated signaling, wherein coding the delta residual comprises using a residual predictor; storing coded video data; and inverse repurposing the coded video data to generate a standard video stream for delivery at a requested bitrate.

In accordance with another aspect, there is provided a method based on Predictive Residual Coding (PRC) using a Conditional Delta Residual (CDR) optimization. The method involves, for each coding unit in a group of pictures to code, calculating a transformed quantized delta residual by difference of a current transformed quantized residual with a transformed quantized residual predictor, coding a delta residual only If the coding lowers a residue energy, and adding and coding a flag Indicating If the coding unit is coded with PRC or not.

In accordance with another aspect, there is provided a method based on Predictive Residual Coding (PRC) using a Rate-Distortion Optimization based on Delta Residuals (RDODR) optimization. The method involves, for each coding unit in a group-of-picture to code, and each coding option or mode to evaluate by minimizing a Rate-Distortion cost function, calculating a transformed quantized delta residual by difference of a transformed quantized current residual with a transformed quantized residual predictor, and using a delta residual bit-cost for the rate estimations to favor prediction and splitting modes that minimize a delta residual to code.

In accordance with another aspect, there is provided a method based on Predictive Residual Coding (PRC) using a Conditional Delta Residual (CDR) optimization and a Rate-Distortion Optimization based on Delta Residuals (RDODR) optimization.

In accordance with another aspect, there is provided joint multi-profile coding format with a reference layer video being a video representation of high quality and resolution and a dependent layer video being a video representation of any quality and resolution lower than the reference layer video, the format generated by Predictive Residual Coding (PRC) with Partial decoding using spatial residual domain reference samples (PRC-Part-TO).

Many further features and combinations thereof concerning embodiments described herein will appear to those skilled In the art following a reading of the instant disclosure.

## DESCRIPTION OF THE FIGURES

In the figures,

Fig. 1 shows an example overview of a video streaming service.

Fig. 2 shows an example overview of state-of-the-art multi-profile video processing and delivery based on a Simulcast strategy.

Fig. 3 shows an example overview of state-of-the-art multi-profile video processing and delivery based on a Full Transcoding strategy.

Fig. 4 shows an example Guided Transcoding using Deflation and Inflation (GTDI) method.

Fig. 5 shows an example method of Predictive Residual Coding (PRC) with Partial decoding using spatial residual domain reference samples (PRC-Part-TQ); showing deflated stream generation on the left and standard stream re-generation on the right. This example approach uses spatial residual samples from a reference high quality video to generate the residual predictor of dependent lower quality videos.

Fig. 6 shows an example variant based on Conditional Delta Residual (CDR) coding and signalling applied to a GTDI method.

Fig. 7 shows an example variant based on Conditional Delta Residual (CDR) coding and signalling applied to a PRC-Part-TQ coding scheme.

Fig. 8 shows an example variant based on CDR and Rate-Distortion Optimization based on Delta Residuals (RDODR) CDR+RDODR applied to the GTDI method.

Fig. 9 shows an example variant based on CDR+RDODR applied to the PRC-Part-TQ method.

Fig. 10 shows Table 1 with example performance variants against state-of-the-art methods from in a Multi-Rate scenario.

Fig. 11 shows Table 2 with example performance variants against state-of-the-art methods In a Multi-Resolution scenario.

## DETAILED DESCRIPTION

Embodiments described herein relate to methods and systems for a joint multi-profile coding format with corresponding transcoding. Embodiments described herein relate to a new coding format, rate-distortion (R-D) optimizations and associated transcoding processes for joint multi-profile coding and delivery. Embodiments described herein can lower the transcoding complexity, and improve trade-offs between storage bit-cost and transmission efficiency of the state-of-the-art (SOTA) method. Example methods include the Guided Transcoding with Deflation and Inflation (GTDI) method or any method based on Predictive Residual Coding (PRC). A method based on PRC Implies the prediction of a residual and the differential coding of that residual with the generated predictor. Embodiments described herein can leverage the redundancy between the residuals of the various video representations using predictive residual coding techniques.

To lower the transcoding complexity of the GTDI approach, embodiments described herein can implement Predictive Residual Coding (PRC) with Partial decoding using spatial residual domain reference samples (PRC-Part-TQ). To further improve the coding efficiency of any method based on PRC, such as GTDI from SOTA or PRC-Part-TQ, embodiments described herein can Involve further optimizations. For example, some embodiments described herein can implement Conditional Delta Residual (CDR) coding and signaling as an optimization which conditions the delta residual coding and signaling to ensure lower residual energy. As another example, some embodiments described herein can implement Rate-Distortion Optimization based on Delta Residuals (RDODR) as an optimization which modifies the rate-distortion optimization criteria used for coding mode decisions to favor prediction and splitting modes that minimize the final coded delta residual and improves the prediction of the residual data.

The following abbreviations or acronyms are used herein:

ABR Adaptive Bit-Rate

PRC Predictive Residual Coding

SOTA State-of-the-art

SC Simulcast

FT Full Transcoding

GT Guided Transcoding

GTDI Guided Transcoding with Deflation and Inflation

PRC-Full-PTQ Predictive Residual Coding with Full decoding using spatial pixel domain reference samples

PRC-Part-TQ Predictive Residual Coding with Partial decoding using spatial residual domain reference samples

RDO Rate Distortion Optimization

MPEG Motion Picture Expert Group

CfE Call for Evidence

CU Coding Unit

CABAC Context Adaptive Binary Arithmetic Coding

MSE Mean-Squared Error

WC Versatile Video Coding standard

HEVC High Efficiency Video Coding standard

VTM WC Test Model software

HTTP Hypertext Transfer Protocol

Embodiments described herein relate to multi-profile encoding and delivery systems for the purpose of HTTP-based Adaptive Bitrate (ABR) video streaming. An encoding and delivery system can process and/or encode video content. The system can store the same content in different (bitrate, resolution) pairs, which defines a set of encoding profiles or coded representations (i.e. bitrate ladder), to serve and adapt the video content to various end-user bandwidth requirements and device capabilities. Embodiments described herein can improve the trade-off between the storage bit-cost of the different representations, the transcoding complexity and transmission efficiency (i.e. bitrate-quality trade-off at transmission) of the requested representation by the end-client while ensuring that the delivered output bitstream remains compliant with the legacy decoding system available at the client. Embodiments described herein relate to a joint multi-profile coding format with corresponding fast transcoding method.

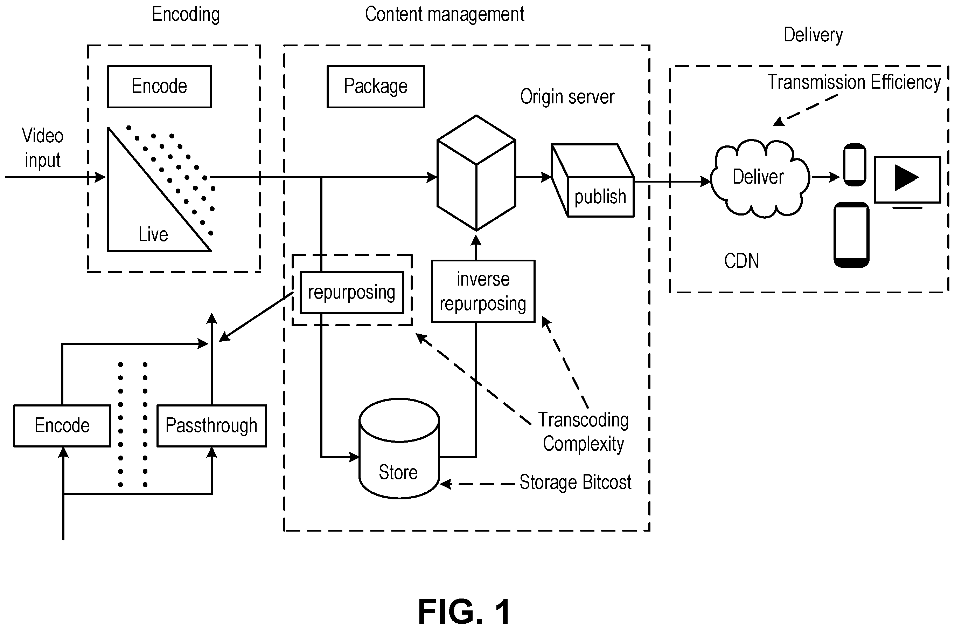

Fig. 1 shows an example overview of a video streaming service. The example diagram shows the main processes of the video streaming service In green (i.e., "Encode", "Package", "publish", "Deliver", "repurposing", "inverse repurposing" and "Store") and associated costs under consideration by embodiments described herein (shown in red, i.e., "Transmission Efficiency", "Transcoding Complexity" and "Storage Bitcost").

A video streaming service, live or on-demand, is composed of three main parts: (1) encoding, (2) content management and (3) delivery, for which an overview is given Figure 1 with the involved processes (show in green) and the associated costs (shown in dashed red) that are considered for optimization In the context of embodiments described herein.

Video streaming platforms heavily rely on HTTP-based Adaptive Bitrate (ABR) streaming technologies, such as MPEG-DASH or HLS to serve and adapt video content to various end-user bandwidth requirements and device capabilities (e.g. from smartphone over mobile network mobility to connected TV over wired network). To adapt to the end-client requirements, the same video content Is processed and encoded independently at different (bitrate, resolution) pairs or coded representations, which defines a set of Independent encoding profiles or coded representations (i.e. bitrate ladder).

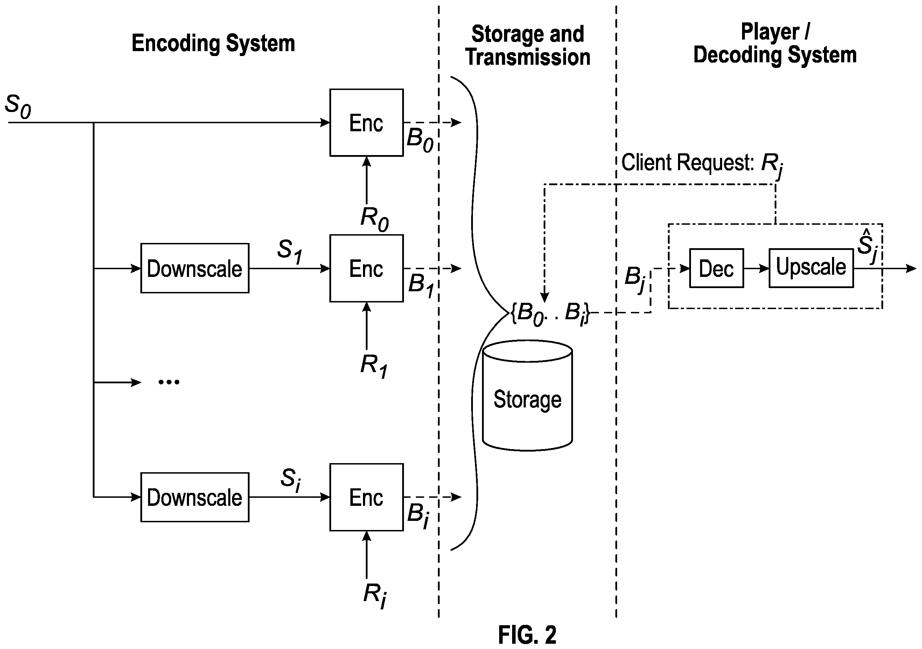

Fig. 2 shows an example overview of multi-profile video processing and delivery based on a Simulcast strategy. Typically, for addressing one client request, the video source signal goes through the following main processing stages: downscaling and encoding at the server side, then decoding and upscaling at the client side, as depicted in Fig. 2. For the sake of simplicity, the file format packaging for ABR delivery is ignored in Fig. 2.

In an example delivery solution and ecosystem, all the resulting Independent coded bitstreams ($\{B_i\}$) corresponding to the different encoding profiles ($\{R_i, S_i\}$), must be stored next to an origin server for subsequent packaging (or may have been already packaged at the encoder) and delivery of the coded profile ($B_j$) which matches the end-client request in terms of bitrate ($R_j$) and resolution. This example delivery strategy can be referred to in the state-of-the art (SOTA) as *Simulcast (SC)*.

*Simulcast* delivery has the following example advantages: *Simulcast* delivery may require no transcoding complexity to serve a requested representation. Bitrate-quality trade-off at transmission for the requested representation is optimal (i.e. best quality for the given rate). However, *Simulcast* delivery may presents the following disadvantages: at the storage, the total bit-cost for all the coded representations is significant and maximal. If the encoder is not located next to the storage and origin servers, all the multiple independent bitstreams must be transmitted before storage which results in a maximal transmission bit-cost to optimize.

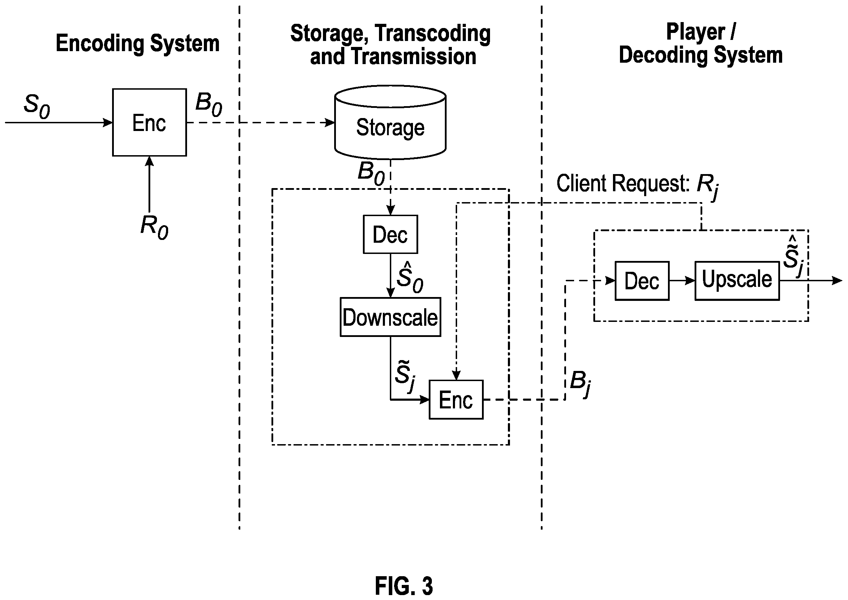

Fig. 3 shows an example overview of multi-profile video processing and delivery based on a *Full Transcoding (FT)* strategy.

In contrast to SC, the *FT* technique offers maximal storage savings at the cost of very high transcoding complexity and low transmission efficiency. This strategy depicted in Fig. 3 works by encoding and storing only the highest quality (HQ) representation of the video. By doing so, the storage requirements for this method are heavily reduced. However, once a user requests a version of the video that Is different from the HQ one, a full transcoding process (*Inverse re-purposing*) must be performed in which the HQ video is decoded (and optionally downsampled), and then re-encoded at the requested bitrate. This process is complex and requires costly computing power. In addition, and since the requested video is a re-encoding of an already degraded video signal, the transmission efficiency of FT is sub-optimal. Either the quality of the dependent profiles would be degraded, or it would require to target higher bitrate at encoding for the HQ profile to compensate for the quality degradation resulting in significant transmission bitrate overhead.

There are alternative strategies to *SImultcast* and *Full transcoding.* For example, a *Guided Transcoding* (GT) approach aims to reduce the transcoding complexity of FT while still maintaining storage savings in comparison to SC. Similar to FT, the GT approach encodes a HQ video and stores it as is. For the lower quality (LQ) encodings, the HQ video is decoded, downsized, and then encoded at the required resolution/rate. However, the LQ streams are fully stripped from their transform coefficients before storage. Consequently, all the decisions of the encoder for the LQ streams are saved in what is called a control stream (CS). When an LQ video is requested for delivery, the HQ video is decoded, downsized, and then re-encoded by guiding the encoding process using the corresponding CS. Since the CS contains all the decisions needed for the encoder, complex R-D search operations for mode decisions can be skipped and the re-encoding process is reduced to the generation and entropy coding of the transformed coefficients.

There is another variant of GT to further reduce its transcoding complexity. In this variant, not all the transform coefficients of the LQ streams are omitted but a fraction of them, which belong to pictures assigned to lower temporal layers in a dyadic hierarchical B picture prediction structure. Transform coefficients of pictures assigned to higher temporal layers usually have lower residual energy than those In lower layers, and will not contribute much to the storage savings if omitted. Consequently, keeping them in the stream would not require re-generation of these coefficients and thus, decreases the transcoding complexity for a small storage penalty. The method is flexible allowing the variation of the number of layers for which the coefficients of pictures are removed. This ultimately offers a trade-off between storage savings and transcoding complexity.

The GT techniques offer a trade-off between storage savings and transcoding complexity but still suffer from the same non-optimal transmission efficiency of FT resulting In significant bitrate overhead or quality degradation at transmission.

Another example Is a *Guided Transcoding using Deflation and Inflation* (GTDI) method. The GTDI strategy aims to reduce storage cost of SC with lower transcoding complexity than FT under the constraint of having the same transmission efficiency of SC. For that purpose, and despite not being formally defined as such, the scheme introduces the concept of Predictive Residual Coding (PRC) with Full decoding using spatial pixel domain reference samples (PRC-Full-PTQ). For the present description, the GTDI strategy may be referred to as PRC-Full-PTQ, where PTQ represents prediction, transformation and quantization.

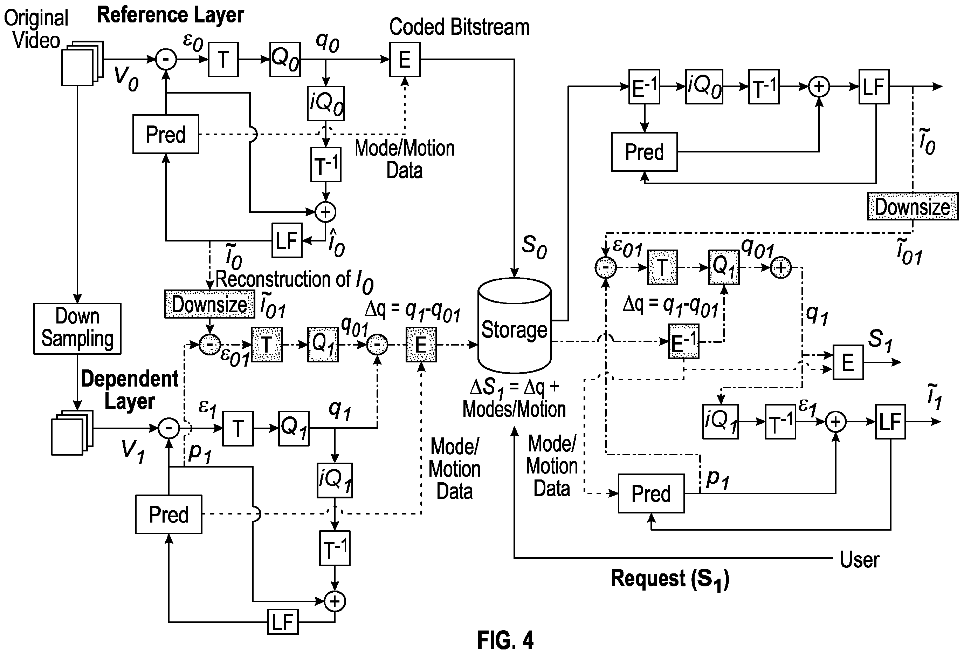

Fig. 4 shows an example of the GTDI (or PRC-Full-PTQ) method which illustrates deflated stream generation on the left and standard stream re-generation on the right. This approach uses reconstructed pixel samples from a reference high quality video to generate the residual predictor of the dependent lower quality videos.

The scheme depicted in Fig. 4 includes new added functionalities (in comparison to any standard hybrid coding scheme as specified in H.264/AVC, HEVC, WC or AV1, and so on) to perform the prediction and differential coding of the residual (shown In red or shaded boxes). It shows the principles of *deflation* and *inflation* for an example of two layers (representations): a reference layer video $V_0$ and a dependent layer video $V_1$ where $V_0$ is the video representation of highest quality and resolution, and $V_1$ can be a representation of any quality and/or resolution lower than $V_0$.

The method starts by applying a *deflation* (re-purposing) process on LQ dependent videos before storage as follows:

$V_0$ is normally encoded to generate a standard stream $S_0$.

$V_1$ Is normally encoded up to the point of entropy encoding that would have produced a standard stream $S_1$.

The reconstructed images $\widetilde{I_0}$ of $V_0$ are downsized (optionally) Into $\widetilde{I_{01}}$ to match the resolution of $V_1$.

The prediction p1 resulting from the encoding of $V_1$ is subtracted from $\widetilde{I_{01}}$ (P part for *prediction In* PTQ acronym) to form an approximate residual $\varepsilon_{01}$ of $\varepsilon_1$.

The approximate residual $\varepsilon_{01}$ is then transformed and quantized (TQ part for *transform* and *quantization* In PTQ acronym) using the quantization parameter of $V_1$ to get $q_{01}$

A difference between $q_{01}$ and the original residual $q_1$ is then calculated to get $\Delta q = q_1 - q_{01}$ which is the delta residual to be entropy coded.

The delta residual and encoder decisions (modes, motion data, and so on) of $V_1$ are entropy encoded to form a non-standard (i.e. *deflated*) stream that Is called $\Delta S_1$.

When a user requests a LQ stream that is represented by a dependent stream $\Delta S_1$ in the scheme, the inverse of the repurposing process *(inflation)* must be invoked. $S_0$ is fully decoded to retrieve the Images $\tilde{I_0}$ which are required to re-generate the residual $\varepsilon_{01}$ used for prediction. The residual $\varepsilon_{01}$ is further transformed and quantized to $q_{01}$, which is added back to $\Delta q$ to get back the original residual $q_1$. A standard Context Adaptive Binary Arithmetic Coding (CABAC) (or any entropy coder as adopted In the considered codec) encoding process of $q_1$ along with modes and motion data is then carried out to form a compliant stream $S_1$. Both *deflation* and *inflation* operations use the same configurations to ensure that the exact same LQ stream is generated as in the case of *Simulcast.* Consequently, this scheme achieves the same transmission efficiency as SC but with lower storage requirements. On the transcoding side, the *Inflation* process to re-generate a LQ stream is coarsely equivalent to the cost of two full decoding loops, which results in this method being much faster than *Full Transcoding,* which requires performing a full decoding followed by a complete encoding with complex R-D optimization.

Accordingly, methods from SOTA have disadvantages. As noted, for simulcast, at the storage, the total bit-cost for all the coded representations is significant and maximum. If the encoder Is not located next to the storage and origin servers, all the multiple Independent bitstreams must be transmitted before storage - which results In a maximal transmission bit-cost to optimize.

For Full Transcoding, the transcoding complexity for serving (i.e. Inverse repurposing in *Fig. 1*) a dependent LQ stream is maximum and implies a high processing cost. Transmission efficiency of dependent LQ streams is the worse or lowest degraded video quality for the same target bitrate as *Simulcast* or equivalently highest bitrate overhead for maintaining same quality than Simulcast (which implies increasing the storage cost of the HQ stream/representation as well)

For Guided Transcoding, the transcoding complexity Is lower than FT but Is still significant. Guiding Transcoding also has the same non-optimal transmission efficiency as FT resulting in significant bitrate overhead or quality degradation at transmission.

For Guided Transcoding with Deflation and Inflation, the method still presents a relatively significant transcoding complexity or cost equivalent to the cost of two full decoding and reconstruction loops for an example of 2 layers or profiles. Several limitations or sub-optimalities can be addressed to improve on the trade-off between storage saving and transmission efficiency. The differential coding of the residue is systematic while it could be Improved to be conditioned to a bit-cost or residual energy criteria. The Rate-Distortion decision criteria used for the prediction and coding mode search decision does not consider the bit-cost of the delta-residual such that the selection of the prediction modes is sub-optimal for PRC.

Embodiments described herein provide improved encoding and delivery methods and systems. For example, embodiments described herein target lowering the transcoding complexity, and improving the trade-offs between storage bit-cost and transmission efficiency of the GTDI approach (PRC-Full-PTQ), or any method based on Predictive Residual Coding (which implies the prediction of a residual and the differential coding of that residual with the generated predictor). For that purpose, and as in GTDI (PRC-Full-PTQ), embodiments described herein leverage the redundancy between the residuals of the various video representations by means of predictive residual coding (PRC) techniques.

To lower the transcoding complexity of the GTDI approach (PRC-Full-PTQ), embodiments described herein use Predictive Residual Coding (PRC) with Partial decoding using spatial residual domain reference samples (PRC-Part-TQ), where TQ represents transformation and quantization.

To further improve the coding efficiency of any method based on Predicive Residual Coding (PRC), such as, for example, PRC-Full-PTQ (GTDI) or PRC-Part-TQ, embodiments described herein may provide further optimizations. An optimization conditions the delta residual coding and signaling to ensure lower residual energy. Another optimization modifies the Rate-Distortion optimization criteria used for coding mode decisions to favor prediction and splitting modes that minimize the final coded delta residual hence improving the prediction of the residual data.

### *Partial decoding using spatial residual domain reference samples (PRC-Part-TQ)*

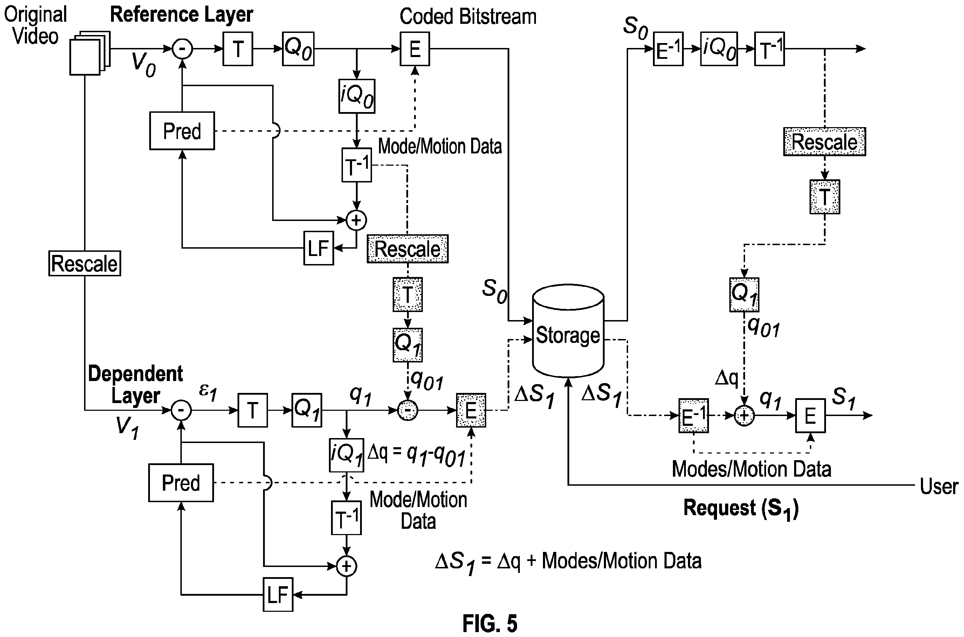

Fig. 5 shows an example PRC-Part-TQ method according to embodiments described herein. The example method shows deflated stream generation on the left and stream re-generation on the right. This example approach uses spatial residual samples from a reference high quality video to generate the residual predictor of dependent lower quality videos.

In some embodiments, the PRC-Part-TQ method relies on partial decoding using spatial residual domain reference samples to further lower the transcoding complexity of the GTDI or PRC-Full-PTQ approach. The corresponding coding method is depicted in Fig. 5. Embodiments described herein relate to a method that involves re-purposing a dependent layer video using an encoded reference layer video by Predictive Residual Coding (PRC) with Partial decoding using spatial residual domain reference samples (PRC-Part-TQ); storing coded video data; and inverse re-purposing the coded video data to generate a standard independent video stream for delivery at a requested bitrate. In some embodiments, a standard stream means decodable by any video compression standard under consideration for final end-client delivery and decoding (at end-client player) (e.g. H.264/AVC, HEVC, WC, VPB, V9, AV1 etc.) That Is, a standard stream can refer to different compressed formats decodable by the end-device and deployed, such as video compression standards (such as 264/AVC, HEVC, VVC, VP8, V9, AV1 etc.)

In Fig. 5, $S_0$ can refer to the standard independent stream (e.g. simulcast) of the reference layer video $V_0$ used for there-purposing process for generating the dependent stream $\Delta S_1$. Further, $S_1$ can refer to the resulting Independent standard stream (e.g. simulcast) after inverse re-purposing.

In this approach, a residual predictor based on the inverse transformed and inverse quantized residual image of the reference layer video is used (instead of spatial pixel domain reference samples in case of GTDI or PRC-Full-PTQ), A reference layer video $V_0$ is normally encoded at the highest resolution or quality and saved as is. In some embodiments, to generate the residual predictor ($q_{01}$) for the dependent layer the transformed quantized residual image of the reference layer stream ($S_0$) can be inverse transformed and inverse quantized, and then optionally rescaled, to obtain a spatial residual image to be used as reference. Then for each coding unit of the dependent layer, the collocated area in the spatial residual image of the reference layer can be transformed and quantized, using same transform size/type and quantization parameter as the current coding unit of the dependent layer, and then can be subtracted to the transformed quantized residue ($q_1$) of the current coding unit of the dependent layer for producing the delta residual ($\Delta q = q_1 - q_{01}$) to be entropy coded.

The encoding processing of the original video reference layer $V_0$ is carried out to generate the encoded reference layer video. As noted, PRC-Part-TQ involves re-purposing a dependent layer video $V_1$ using the reference layer video $V_0$. For example, in some embodiments, for the dependent video $V_1$ the following re-purposing process is invoked:

The residual image of the reference layer video $V_0$ is re-scaled to the resolution of $V_1$ (the dependent layer video) and then stored In a buffer.

The encoding process of $V_1$ (the dependent layer video) is carried out normally up to the point of entropy coding and the encoder is left to make Its optimal decisions as for an SC stream.

Before entropy encoding, and for each coding unit (CU) of the dependent layer video, the corresponding position and area in the spatial residual image (i.e. after inverse-transform and inverse-quantization) of $V_0$ (reference layer video) is transformed and quantized (where TQ refers to *Transform* and *Quantization*) to obtain the residual predictor $q_{01}$ (after re-scaling if necessary) before being subtracted from the original residual $q_1$ of the dependent layer video $V_1$ which leads to the delta residual $\Delta q = q_1 - q_{01}$. in some embodiments, this involves using the transform type and quantization parameter of the considered CU of the dependent layer to obtain a transformed quantized residual predictor $q_{01}$ to further subtract the transformed quantized residue of the considered CU of the dependent layer and to obtain a delta residue for this CU.

The delta residual $\Delta q$ along with the optimal encoder decisions are entropy encoded to generate the dependent video stream $\Delta S_1$.

As noted, PRC-Part-TQ involves inverse re-purposing coded video data (e.g. dependent video stream $\Delta S_1$), A user can request the standard video stream (e.g. request ($S_1$)). In some embodiments, inverse repurposing the coded video data involves entropy decoding transformed quantized residual coefficients from the reference standard video stream $S_0$ of the reference layer video $V_0$, and inverse quantizing coefficients and inverse transforming coefficients to obtain a residual image for rescaling to match resolution of the dependent layer video $V_1$ represented by the dependent video stream $\Delta S_1$. For example, in some embodiments, in order to re-generate the standard independent video stream (e.g. *Simulcast* version) $S_1$ from the dependent stream $\Delta S_1$, upon user request (i.e. Request ($S_1$)), the following inverse re-purposing process can be invoked:

The reference Independent video stream $S_0$ Is entropy decoded and the coefficients are inverse quantized, and inverse transformed to obtain the residual image which is then re-scaled to match the resolution of $S_1$.

From the dependent stream $\Delta S_1$, the delta coefficients are entropy decoded to obtain $\Delta q$, Then, for each CU of the dependent stream, the co-located area In the inverse transformed and inverse quantized spatial residual image of $S_0$ is transformed and quantized, using the same transform size/type and quantization parameter than the current CU from the dependent stream, to get the residual predictor $q_{01}$ which is added to the delta residual $\Delta q$ to get back the original residual $q_1$.

Finally, the original transformed quantized residual $q_1$ is entropy encoded along with the encoder decisions to obtain the Independent standard stream $S_1$ for delivery to the user e.g., in response to the request Request ($S_1$).

Embodiments described herein can reduce the transcoding complexity, to re-generate a standard independent stream equivalent to Simulcast, to only two partial decoding loops (with re-scaling if necessary) and an entropy encoding operation. It achieves the same optimal transmission efficiency as SC and GTDI/PRC-Full-PTQ while significantly saving on storage bit-cost of dependent streams, by encoding a difference of residuals. For example, a rescaling step may be required if the video profiles or layers to jointly code are not of the same resolution. This is described herein In relation to Multi-Resolution scenario examples. The rescaling step can be skipped or may not be required if video profiles are of the same resolution while the rest of the coding scheme remains. This Is described herein In relation to Mutli-Rate scenario examples.

## Coding efficiency optimizations

To further improve the coding efficiency of the base method PRC-Part-TQ, or any SOTA method based on Predictive Residual Coding such as in GTDI/PRC-Full-PTQ, embodiments described herein propose complementary optimizations. Example coding efficiency optimizations Include Conditional Delta Residual (CDR) coding and signaling, and Rate-Distortion Optimization Based on Delta Residuals (RDODR).

### Conditional Delta Residual (CDR) coding and signaling

For the base method PRC-Part-TQ, or the other example methods such as GTDI/PRC-Full-PTQ, a delta residual can be calculated and coded for every coding units or blocks (CU) in a group of pictures. These are example methods, and the optimization applies to any method based on Predictive Residual Coding. However, for some cases, if the residual predictor is not well correlated with the residual blocks to predict then coding the delta-residual can result In a significant bit-cost overhead. To address this Issue, embodiments described herein Introduce a condition for coding the delta-residual of the dependent layer. For example, embodiments described herein can code the inter-layer delta residual only if it lowers the residue energy. More precisely, the differential residual is coded if and only if it satisfies Equation 1:

$$\sum_{k=1}^{numComp} \sum_{j=1}^{h/s} \sum_{l=1}^{w/s} \left| \Delta q_{i,j}^{k} \right| < \sum_{k=1}^{numComp} \sum_{j=1}^{h/s} \sum_{l=1}^{w/s} \left| q_{1_{i,j}}^{k} \right| \quad (\text{Eq. 1})$$

Where $numComp$ is the number of color components (e.g. 3 for YCbCr), w and $h$ are the width and height of the current coding block (or unit) respectively, $\Delta q$ and $q_1$ are the delta residual and original residual, s is a scale factor according to the color component and chroma sub-sampling (e.g. for YCbCr 4:2:0, s = 2 for Cb/Cr and s = 1 for Y). If this condition (e.g. equation 1) is not satisfied, then the original residual $q_1$ of the block is coded instead.

To control this condition and to be able to have a decodable stream (for subsequent inverse repurposing process), a flag called *InterLayerResidualPrediction* is added and coded for each CU which indicates if the residue is inter-layer predicted (true) or not (false). The flag can be entropy coded using CABAC (or any other entropy coder as per the considered codec for implementation) using either the bin probability initialization states of the root Coded Block Flag If available (root CBF as standardized In H264/AVC, HEVC or VVC) or any custom bin probability model that can be typically contextuallzed according to neighboring flag values (e.g. top or left coding block neighbors).

CDR coding and signaling demonstrates Improvements of storage savings on dependent streams with no impact on the quality at transmission and on the transcoding complexity.

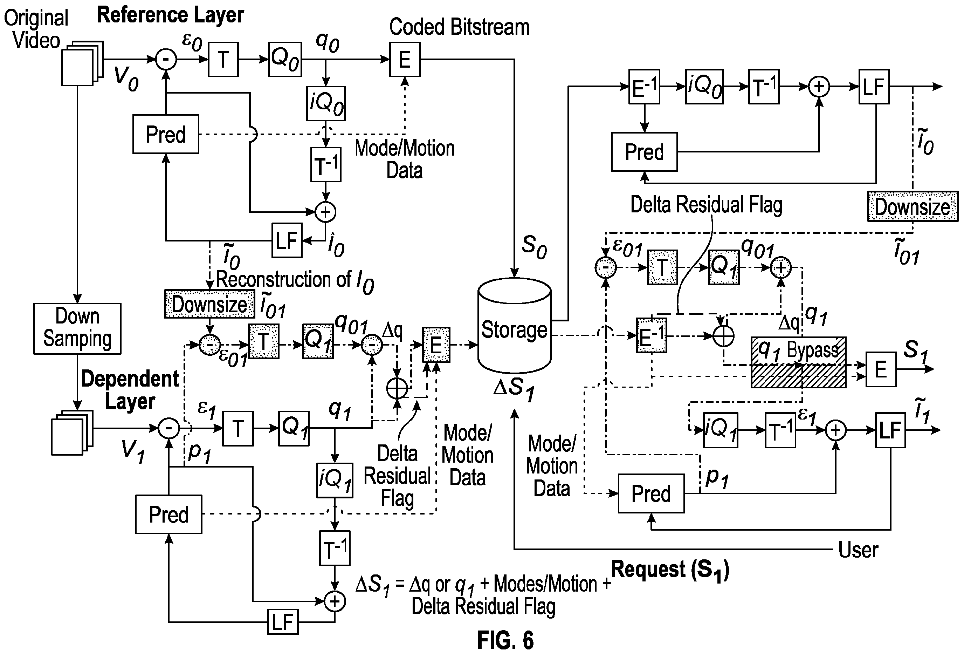

Fig. 6 shows an example variant based on Conditional Delta Residual (CDR) coding and signaling applied to GTDI/PRC-Full-PRTQ coding scheme. The example diagram depicts the condition for coding the delta-residual of the dependent video layer by an "OR" box (i.e. red circle with a cross) with associated signalling (i.e. "delta residual flag" taking the value of "1/true" if delta residual coding (i.e. Δq) else "0/false" if legacy residual coding (i.e. q1)). At the coding/re-purposing process, the decision is made based on the residual energy example condition formalized, such as in equation 1 (e.g. code the inter-layer delta residual only If It lowers the residue energy). At the transcoding/inverse repurposing process the delta residual flag Is first entropy decoded and then if Its value Is to «true/1» the delta residual decoding and residual prediction generation process Is Invoked (i.e. the top branch out-of-the bypass overlay) for generating back q1. If the delta residual flag value is to «false» then the bypass branch is invoked and q1 is used as it is for standard stream generation.

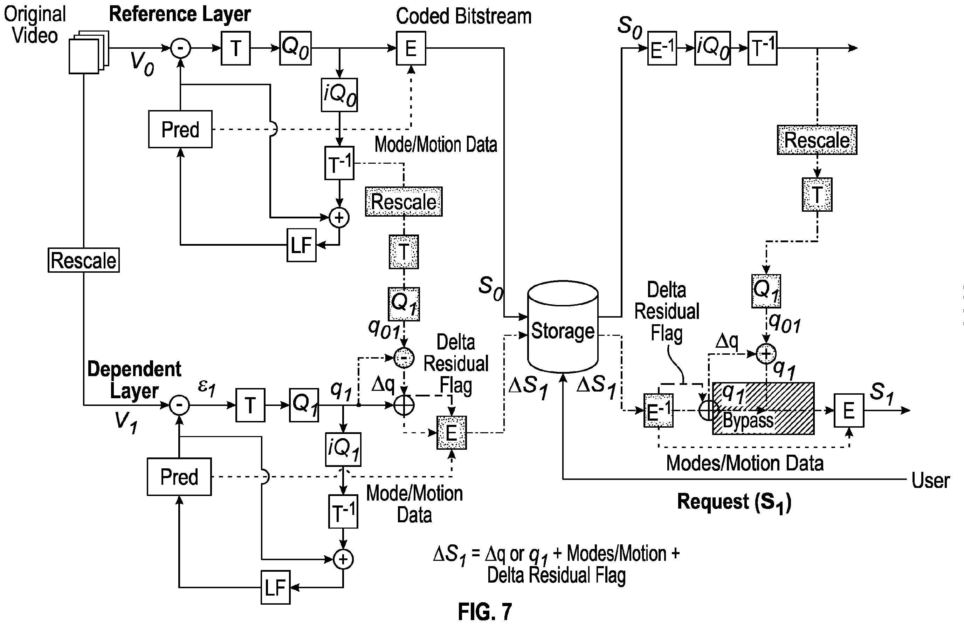

Fig. 7 shows an example variant based on Conditional Delta Residual (CDR) coding and signaling applied to PRC-Part-TQ coding scheme. The example diagram depicts the condition for coding the delta-residual of the dependent layer by a "OR" box (i.e. red circle with a cross) with associated signalling (i.e. "delta residual flag" taking the value of "1ltrue" if delta residual coding (i.e. Δq) else "0/false" if legacy residual coding (i.e. q1)). At the coding/repurposing process, the decision is made based on the residual energy example condition formalized equation 1 (e.g. code the Inter-layer delta residual only if It lowers the residue energy). At the transcoding/inverse repurposing process the delta residual flag is first entropy decoded then if its value is to «true/1» the delta residual decoding and residual prediction generation process is invoked (i.e. the top branch out-of-the bypass overlay) for generating back q1. If the delta residual flag value is to «false» then the bypass branch is invoked and q1 is used as it is for standard stream generation..

### Rate-Distortion Optimization Based on Delta Residuals (RDODR)

Embodiments described herein can update the Rate-Distortion Optimization (RDO) process used for coding mode search and decision by using delta residual bit-cost for the rate estimations, to favor prediction and splitting modes that will minimize the delta residual to code for the dependent streams.

In an RDO process, the encoder exhaustively tests different prediction and splitting modes or options ($\forall p \in P$),

then decides which mode to use for a given block or unit based on the minimization of a rate-distortion cost function defined as $J(R, D) = D + \lambda.R$ where $R$ is the bit-cost, $D$ Is the distortion and $\lambda$ Is the Lagrange multiplier that balances the importance of bit-cost and distortion.

For each coding block or coding unit (CU), and candidate coding mode $\forall p \in P$, the distortion D is typically estimated by performing the prediction, transform, quantization and inverse processes plus optional in-loop filtering and measuring the distance (e.g. L2 based on MSE) of the reconstructed samples with the source samples. The rate or bit-cost is usually estimated by invoking the pseudo-coding of the prediction mode and transformed quantized residuals (i.e. $q_1$) using a CABAC (or any other entropy coder as per the considered codec) estimation process, as formalized in [0109].

$$p^* = argmin_p\big(D(p) + \lambda.R(q_1|p)\big) \text{ (Eq. 2)}$$

In the context of any Predictive Residual Coding scheme, embodiments described herein propose to update the bitrate estimations in the RDO process, such the delta residual bit-cost (i.e. $\Delta q$) is calculated for each block instead of the default residuals $q_1$, as formalized in [0111]. Such optimization can be combined with CDR coding and signaling (2.1) such the appropriate bit-cost of delta-residuals or residuals Is estimated according to the condition defined in 2.1.

$$p^* = argmin_p\big(D(p) + \lambda.R(\Delta q|p)\big) \text{ (Eq. 3)}$$

Such optimization can be combined with CDR coding and signaling such that the appropriate bit-cost of delta-residuals or residuals is estimated according to the condition defined In Equation 1.

Such optimization enables further storage bit-cost saving with no impact on the transcoding complexity. However, it can slightly lower the transmission efficiency (e.g. in comparison to SC) but the decrease in efficiency may be negligible in comparison to the storage saving benefits.

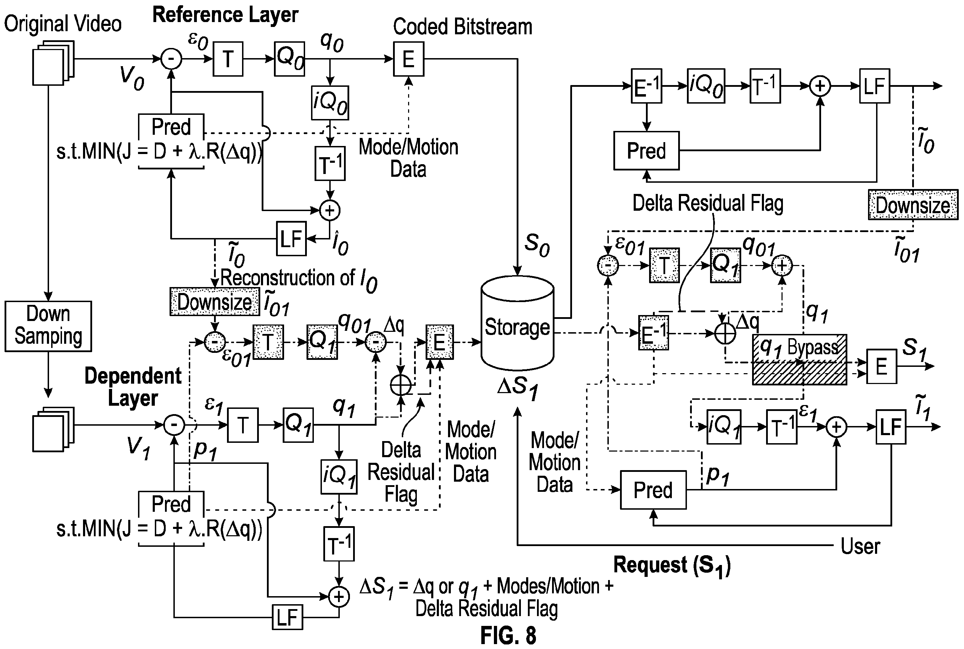

Fig. 8 shows an example variant based on Conditional Delta Residual (CDR) and Rate-Distortion Optimization Based on Delta Residuals (RDODR) CDR+RDODR applied to GTDI method or PRC-Full-PTQ. In the diagram, as an Illustrative example, the RDODR addition to the CDR Is depicted by a Lagrangian cost function minimization update In the in-loop prediction/coding mode decision process (i.e. "Pred" box In the diagram).

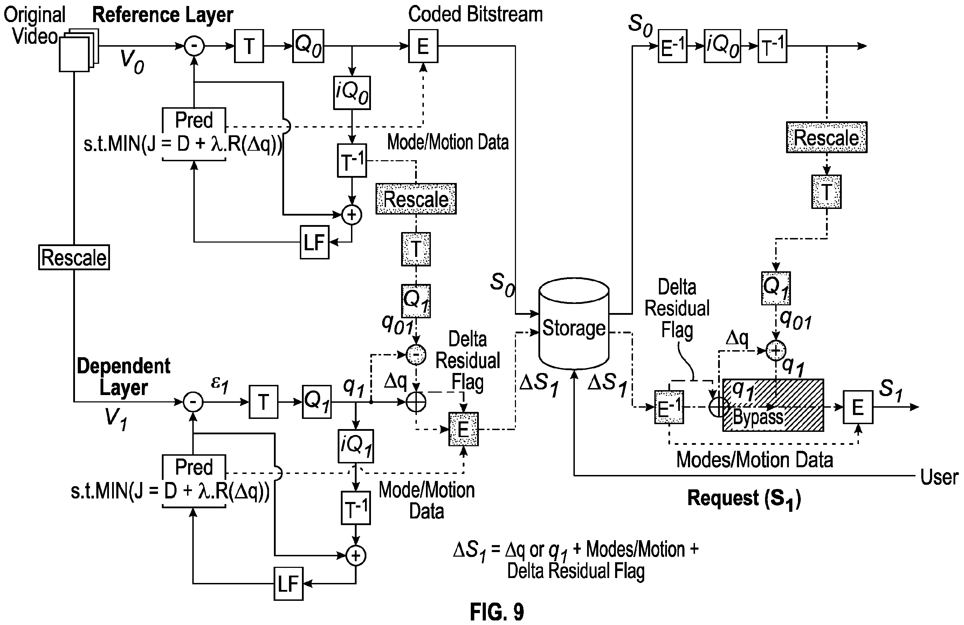

Fig. 9 shows an example variant CDR+RDODR applied to the PRC-Part-TQ method In the diagram, the RDODR addition to the CDR is depicted by a Lagrangian cost function minimization update in the in-loop prediction/coding mode decision process (i.e. "Pred" box in the diagram).

Embodiments described herein, including variants, can be implemented and validated In the context of VVC codec, and for the following example scenarios.

The different variants, as well as methods from SOTA such as Simulcast, Full Transcoding, and GTDI/PRC-Full-PQT, can be Implemented and evaluated on top of any codec/standard based on hybrid video coding scheme, such as for example the WC reference software test model, VTM version 19.0, or any other standard and associated reference software: AVC, HEVC, WC or, VP8, VP9, AV1, and so on. For techniques based on Predictive Residual Coding, including the different embodiments described herein and GDTI/PRC-Full-PTQ, the VVC multi-layer coding structure can be leveraged on using the VTM Multi-Layer Main 10 profile. With the Layer 0 set as the reference video layer and Layer 1 set as the dependent video layer. For the re-scaling of the reconstructed and residual reference samples between layers, the Reference Picture Re-sampling (RPR) filter (as specified in the WC standard) can be used (but any resampling filter can be used in other examples).

The performance of the different predictive residual coding schemes , including variants and GDTI/PRC-Full-PTQ, can be assessed and compared to SC and FT. The storage bit-cost, transmission efficiency and transcoding complexity performances at different stages of the video delivery scheme can be considered in different scenarios, such as Multi-Rate and Multi-Resolution video delivery scenarios.

A *Multi-Rate* scenario: in a Multi-Rate scenario, embodiments consider a fixed resolution bitrate ladder where the representations vary In bitrate only according to the chosen quantization parameter (QP) value. All the streams are encoded using the native resolution of the test sequence. The reference stream is encoded with a QP value $QP_0 \in \{22, 27\}$. The dependent streams are then encoded using the following QP values: $QP_1 = QP_0 + offset$ where $offset \in \{2,4,6,8\}$ which yields $QP_1 \in \{24,26,28,30\}$ for $QP_0=22$ and $QP_1 \in \{29,31,33,35\}$ for $QP_0=27$. Consequently, In this scenario no rescaling Is Invoked.

A *Multi-Resolution* scenario: in a Multi-Resolution scenario, embodiments consider a bitrate ladder where the dependent streams can be of resolutions different from the native one with varying bitrates for the same resolution. The reference layer Is fixed at the native resolution $L_0$ of the test sequence which Is 2160p for classA and 1080p for classB sequences. The QP value of the reference layer is $QP_0 \in \{22,27\}$. As for the dependent streams, the resolution called L1 is defined as L1 $\in \zeta$ 1440p,1080p,720p,540p,360p} for classA sequences, and L1 $\in \{720p,540p,360p\}$ for classB sequences as per the MPEG Call for Evidence (CfE) on Network-Distributed Video Coding (NDVC). The down-scaled versions of each of the sequences are generated with FFmpeg using its bi-cubic filter. In addition, for each sequence and each resolution, dependent streams can be encoded using the same QP values $QP_1$ than in the previous *Multi-Rate* scenario.

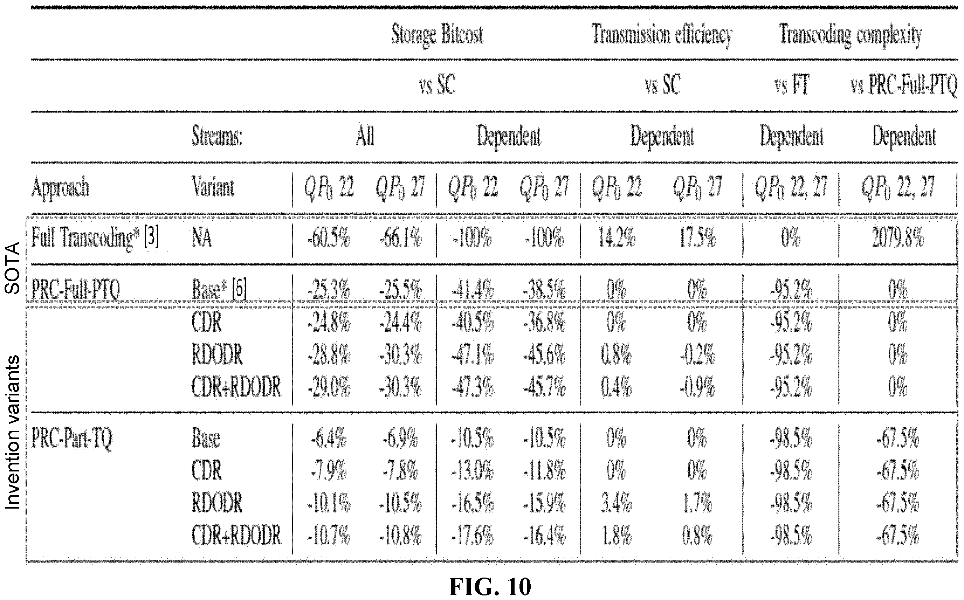

Fig. 10 shows Table 1 with example performance variants against state-of-the art (SOTA) methods in a Multi-Rate scenario.

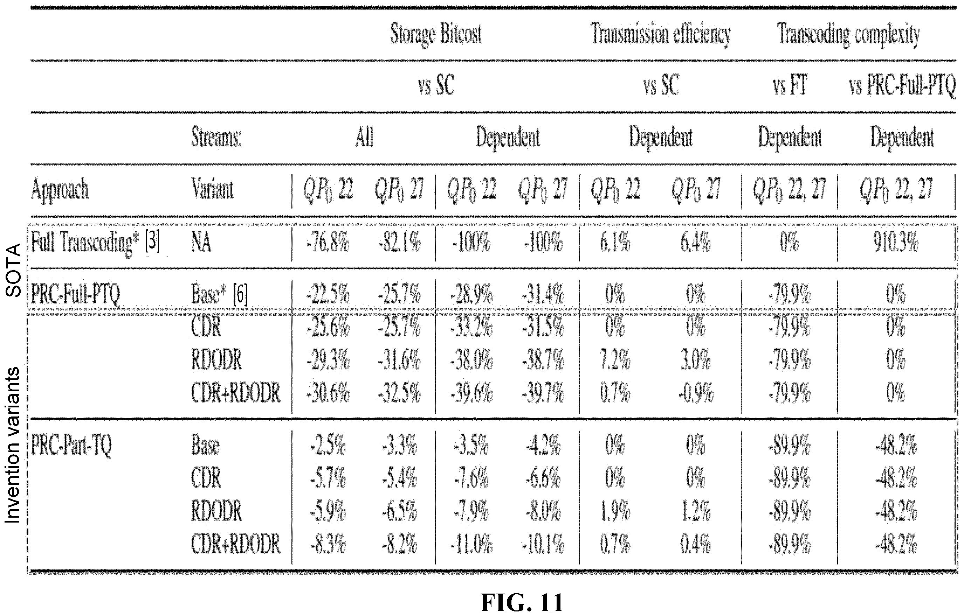

Fig. 11 shows Table 2 with example performance variants against (SOTA) methods In a Multi-Resolution scenario.

Table 1 and Table 2 summarized the performance results for different SOTA methods (marked by an asterisk (*) and framed in dashed orange, "SOTA") and proposed variants of the embodiments described herein (e.g. framed in dashed green, "Invention variants"). For all the conducted tests, embodiments consider classA and classB sequences as defined in the CTC of MPEG CfE on NDVC. The results for storage bit-cost savings are shown for two cases: when considering all streams (the "All" column) and when only considering dependent streams (the "Dependent" column). For transmission efficiency and transcoding complexity, the results can only be shown for dependent streams and are averaged over the different sequences and QP values $QP_1$. The transmission efficiency results were compared to those of the SC encodings on a similar quality basis. For that purpose, 3rd order R-D polynomial functions were estimated using bitrates and the peak signal-to-nolse ratios (PSNRs) of each of the SC sequences. Then, for each PSNR of a sequence in the tested methods, the corresponding SC bitrate is interpolated using the polynomial function. Hence, the resulting bitrate is the SC bitrate at the same quality of the tested approach. The methodology to calculate the different savings at the different stages were taken from the CfE and are as follows:

For storage bit-cost:

$$Diff(storage)_{SC} = 100 \times \frac{\sum_{n=0}^{N-1} \tilde{r}_n - \sum_{n=0}^{N-1} r_n}{\sum_{n=0}^{N-1} r_n}$$

where $\tilde{r}_n$ is the bitrate of stream n for the method under test, $r_n$ is the SC bitrate of stream n and N is the total number of streams (representations) for a specific sequence. For the storage saving measurements of the *"dependent" streams only,* the reference stream (i.e. index 0) is omitted in the sums.

For transmission efficiency:

$$Diff(transmission)_{SC} = 100 \times \frac{\tilde{r}_n - \hat{r}_n}{\hat{r}_n}$$

where $\hat{r}_n$ is the SC bitrate of stream *n* interpolated to match the PSNR of $\tilde{r}_n$ for fair comparison.

For transcoding complexity:

$$Diff(complexity)_{ref} = 100 \times \frac{t_{method_n} - t_{ref_n}}{t_{ref_n}}$$

where $t_{method_n}$ is the transcoding time of representation n for the method under test, $t_{ref_n}$ is the transcoding time of representation n for the reference method (FT or GTDIIPRC-Full-PTQ)

Example variants of embodiments described herein include:

PRC-Full-PTQ+CDR+RDODR: provided approximately -45% and -40% storage bit-cost savings on dependent streams in Multi-Rate and Multi-Resolution scenarios, respectively, for negligible impacts on transmission efficiency (or even slight improvements for some test conditions) and the same transcoding complexity than GTDI (-95% faster than FT)

PRC-Part-TQ+CDR+RDODR: provided approximately -17% and -11% storage bit-cost savings on dependent streams in Multi-Rate and Multi-Resolution scenarios, respectively, for negligible impacts on transmission efficiency, and significant reduction of the GTDI transcoding complexity, with approximately -68% and -48% transcoding run-time acceleration in Multi-Rate and Multi-Resolution scenarios, respectively.

Embodiments described herein can provide new coding formats, R-D optimizations and associated transcoding techniques for joint multi-profile coding and delivery. Embodiments described herein provide example benefits: lowering the transcoding complexity, and improving the trade-offs between storage bit-cost and transmission efficiency of the GTDI (PRC-Full-PTQ) methods. For that purpose, embodiments described herein leverage the redundancy between the residuals of the various video representations by means of predictive residual coding techniques with the main innovative parts to protect being:

To lower the transcoding complexity of the GTDI approach (PRC-Full-PTQ), embodiments described herein propose the idea of Predictive Residual Coding (PRC) with Partial decoding using spatial residual domain reference samples (PRC-Part-TQ).

To further Improve the coding efficiency of any method based on PRC, such as PRC-Full-PTQ (GTDI from SOTA) or PRC-Part-TQ, embodiments described herein propose the two optimizations:

Conditional Delta Residual (CDR) coding and signaling: optimization which conditions the delta residual coding and signaling to ensure lower residual energy.

Rate-Distortion Optimization based on Delta Residuals (RDODR): optimization which modifies the Rate-Distortion optimization criteria commonly used for coding mode decisions to favor prediction and splitting modes that minimize the final coded delta residual Improving the prediction of the residual data.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output Information Is applied to one or more output devices. In some embodiments, the communication Interface may be a network communication interface. In embodiments In which elements may be combined, the communication interface may be a software communication interface, such as those for inter-process communication. In still other embodiments, there may be a combination of communication interfaces implemented as hardware, software, and combination thereof.

Throughout the following discussion, numerous references will be made regarding servers, services, interfaces, portals, platforms, or other systems formed from computing devices. It should be appreciated that the use of such terms is deemed to represent one or more computing devices having at least one processor configured to execute software Instructions stored on a computer readable tangible, non-transitory medium. For example, a server can include one or more computers operating as a web server, database server, or other type of computer server in a manner to fulfill described roles, responsibilities, or functions.

The following discussion provides many example embodiments. Although each embodiment represents a single combination of inventive elements, other examples may include all possible combinations of the disclosed elements. Thus if one embodiment comprises elements A, B, and C, and a second embodiment comprises elements B and D, other remaining combinations of A, B, C, or D, may also be used.

The term "connected" or "coupled to" may Include both direct coupling (in which two elements that are coupled to each other contact each other) and Indirect coupling (in which at least one additional element Is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are Implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and Integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Embodiments of methods and systems may involve computing devices for encoding and delivery. The computing devices may be the same or different types of devices. The computing device at least one processor, a data storage device (Including volatile memory or non-volatile memory or other data storage elements or a combination thereof), and at least one communication Interface. The computing device components may be connected in various ways including directly coupled, indirectly coupled via a network, and distributed over a wide geographic area and connected via a network (which may be referred to as "cloud computing").

A computing device includes at least one processor, memory, at least one I/O interface, and at least one network interface. The network interface enables computing device to communicate with other components, to exchange data with other components, to access and connect to network resources, to serve applications, and perform other computing applications by connecting to a network (or multiple networks) capable of carrying data.

Although the embodiments have been described in detail, it should be understood that various changes, substitutions and alterations can be made herein without departing from the scope as defined by the appended claims.

Moreover, the scope of the present application is not intended to be limited to the particular embodiments of the process, machine, manufacture, composition of matter, means, methods and steps described In the specification. As one of ordinary skill In the art will readily appreciate from the disclosure of the present Invention, processes, machines, manufacture, compositions of matter, means, methods, or steps, presently existing or later to be developed, that perform substantially the same function or achieve substantially the same result as the corresponding embodiments described herein may be utilized. Accordingly, the appended claims are intended to Include within their scope such processes, machines, manufacture, compositions of matter, means, methods, or steps

As can be understood, the examples described above and illustrated are intended to be exemplary only.

## Claims

1. A method for joint multi-video profile coding and delivery for Adaptive Bitrate video streaming, the method comprising:

   repurposing a dependent layer video of an encoded reference layer video by Predictive Residual Coding (PRC) with Partial decoding using spatial residual domain reference samples (PRC-Part-TQ);
   storing coded video data; and
   inverse repurposing the coded video data to generate an Independent standard video stream for delivery at a requested bitrate.

2. The method of claim 1 wherein the reference layer video is a video representation of high quality and resolution and the dependent layer video Is a video representation of any quality and resolution lower than the reference layer video.

3. The method of claim 1 further comprising using inverse transformed and inversed quantized spatial residual samples from a reference high quality video to generate a residual predictor of dependent lower quality video for the Predictive Residual Coding (PRC).

4. The method of claim 1 further comprising generating a residual predictor for the dependent layer video by inverse transforming and Inverse quantizing a transformed quantized residual Image of the reference layer video.

5. The method of claim 4 wherein rescaling the Inverse transformed and Inverse quantized spatial residual image of the reference layer video to the resolution of the dependent video and storing in a buffer.

6. The method of claim 4 further comprising, for each coding unit of the dependent video layer, before entropy encoding, transforming and quantizing a corresponding position and area in an inverse transformed and inverse quantized spatial residual image of the reference layer video, using a transform type and quantization parameter of the respective coding unit of the dependent video layer, to obtain a transformed quantized residual predictor to further subtract to a transformed quantized residue of the respective coding unit of the dependent video layer and to obtain a delta residue for the respective coding unit.

7. The method of claim 6 further comprising entropy encoding the delta residue , and associated standard coding unit syntax, to generate a dependent video stream.

8. The method of claim 1 wherein inverse repurposing the coded video data comprises entropy decoding transformed quantized residual coefficients from a reference independent standard video stream of the reference layer video, and inverse quantizing coefficients and inverse transforming coefficients to obtain a spatial residual image for rescaling to match resolution of the dependent video layer represented by a dependent video stream).

9. The method of claim 1 wherein inverse repurposing the coded video data comprises entropy decoding delta residual coefficients, and associated standard coding unit syntax, from the dependent video stream.

**10.** The method of claim 9 further comprising, for each coding unit of a dependent video stream, transforming and quantizing a collocated area In the inverse transformed and inverse quantized spatial residual image of the reference video layer, using a transform type and quantization parameter of the respective coding unit, to obtain a transformed quantized residual predictor to further add to a delta residueof the respective coding unit to obtain an original transformed quantized residue for the respective coding unit to transcode.

**11.** The method of claim 10 further comprising entropy encoding, for each coding unit of a dependent video stream, the original transformed quantized residue and associated coding unit syntax to obtain an independent standard stream for delivery.

**12.** The method of claim 1 further comprising conditional delta residual coding and signaling by, for all coding units in a group of pictures, calculating and coding a delta residual of the dependent layer video using a residual predictor.

**13.** The method of claim 12 further comprising, for each coding unit, coding an inter-layer delta residual only if the coding lowers a residue energy, and adding and coding a flag Indicating if the coding unit Is inter-layer predicted.

**14.** The method of claim 1 further comprising using a delta residual bit-cost for the rate estimations to favor prediction and splitting modes that minimize a delta residual to code for the dependent video layer.

**15.** A server system for multi-video profile coding and delivery for Adaptive Bitrate video streaming, the system comprising:

one or more processors to repurpose a dependent video of an encoded reference layer video by Predictive Residual Coding (PRC) with Partial decoding using spatial residual domain reference samples (PRC-Part-TQ), and Inverse repurpose the coded video data to generate an Independent standard video stream for delivery. one or more memories storing coded video data.

**FIG. 1**

**FIG. 2**

**FIG. 3**

EP 4 637 151 A1

FIG. 4

Original
Video

**Reference Layer**

$V_0$

Coded Bitstream

Mode/Motion Data

Rescale

$q_{01}$

$S_0$

Storage

$\Delta S_1$

$\Delta S_1$

Rescale

**Dependent
Layer**

$V_1$

$\varepsilon_1$

$q_1$

$\Delta q = q_1 - q_{01}$

Mode/Motion
Data

$S_0$

Rescale

$q_{01}$

$Q_1$

$\Delta q$

$q_1$

$S_1$

Modes/Motion Data

**Request ($S_1$)**

User

$\Delta S_1 = \Delta q$ + Modes/Motion Data

**FIG. 5**

FIG. 6

FIG. 7

$\Delta S_1 = \Delta q$ or $q_1$ + Modes/Motion + Delta Residual Flag

**FIG. 8**

Reference Layer

Dependent Layer

Original Video

Coded Bitstream

Reconstruction of $I_0$

Mode/Motion Data

Delta Residual Flag

Storage

$S_0$

$\Delta S_1$

Downsize

Down Samping

$q_1$ Bypass

User

Request ($S_1$)

$\Delta S_1 = \Delta q$ or $q_1$ + Modes/Motion + Delta Residual Flag

s.t.MIN($J = D + \lambda . R(\Delta q)$)

FIG. 9

$\Delta S_1 = \Delta q$ or $q_1$ + Modes/Motion + Delta Residual Flag

Request ($S_1$)

User

$S_1$

Modes/Motion Data

Bypass

Delta Residual Flag

$q_{01}$

$q_1$

$\Delta q$

Storage

$\Delta S_1$

$S_0$

Rescale

Coded Bitstream

Original Video

Reference Layer

$V_0$

Mode/Motion Data

s.t.MIN(J = D + $\lambda$.R($\Delta q$))

$q_{01}$

$\Delta q$

Delta Residual Flag

$S_0$

Dependent Layer

$V_1$

$\varepsilon_1$

$q_1$

Mode/Motion Data

s.t.MIN(J = D + $\lambda$.R($\Delta q$))

EP 4 637 151 A1

| | Streams: | Storage Bitcost | | | | Transmission efficiency | | Transcoding complexity | |
| | | vs SC | | | | vs SC | | vs FT | vs PRC-Full-PTQ |
| | | All | | Dependent | | Dependent | | Dependent | Dependent |
| Approach | Variant | $QP_0$ 22 | $QP_0$ 27 | $QP_0$ 22 | $QP_0$ 27 | $QP_0$ 22 | $QP_0$ 27 | $QP_0$ 22, 27 | $QP_0$ 22, 27 |
|---|---|---|---|---|---|---|---|---|---|
| Full Transcoding* [3] | NA | -60.5% | -66.1% | -100% | -100% | 14.2% | 17.5% | 0% | 2079.8% |
| PRC-Full-PTQ | Base* [6] | -25.3% | -25.5% | -41.4% | -38.5% | 0% | 0% | -95.2% | 0% |
| | CDR | -24.8% | -24.4% | -40.5% | -36.8% | 0% | 0% | -95.2% | 0% |
| | RDODR | -28.8% | -30.3% | -47.1% | -45.6% | 0.8% | -0.2% | -95.2% | 0% |
| | CDR+RDODR | -29.0% | -30.3% | -47.3% | -45.7% | 0.4% | -0.9% | -95.2% | 0% |
| PRC-Part-TQ | Base | -6.4% | -6.9% | -10.5% | -10.5% | 0% | 0% | -98.5% | -67.5% |
| | CDR | -7.9% | -7.8% | -13.0% | -11.8% | 0% | 0% | -98.5% | -67.5% |
| | RDODR | -10.1% | -10.5% | -16.5% | -15.9% | 3.4% | 1.7% | -98.5% | -67.5% |
| | CDR+RDODR | -10.7% | -10.8% | -17.6% | -16.4% | 1.8% | 0.8% | -98.5% | -67.5% |

SOTA

Invention variants

**FIG. 10**

| | | Storage Bitcost | | | | Transmission efficiency | | Transcoding complexity | |
| | | vs SC | | | | vs SC | | vs FT | vs PRC-Full-PTQ |
| | Streams: | All | | Dependent | | Dependent | | Dependent | Dependent |
| Approach | Variant | $QP_0$ 22 | $QP_0$ 27 | $QP_0$ 22 | $QP_0$ 27 | $QP_0$ 22 | $QP_0$ 27 | $QP_0$ 22, 27 | $QP_0$ 22, 27 |
|---|---|---|---|---|---|---|---|---|---|
| Full Transcoding* [3] | NA | -76.8% | -82.1% | -100% | -100% | 6.1% | 6.4% | 0% | 910.3% |
| PRC-Full-PTQ | Base* [6] | -22.5% | -25.7% | -28.9% | -31.4% | 0% | 0% | -79.9% | 0% |
| | CDR | -25.6% | -25.7% | -33.2% | -31.5% | 0% | 0% | -79.9% | 0% |
| | RDODR | -29.3% | -31.6% | -38.0% | -38.7% | 7.2% | 3.0% | -79.9% | 0% |
| | CDR+RDODR | -30.6% | -32.5% | -39.6% | -39.7% | 0.7% | -0.9% | -79.9% | 0% |
| PRC-Part-TQ | Base | -2.5% | -3.3% | -3.5% | -4.2% | 0% | 0% | -89.9% | -48.2% |
| | CDR | -5.7% | -5.4% | -7.6% | -6.6% | 0% | 0% | -89.9% | -48.2% |
| | RDODR | -5.9% | -6.5% | -7.9% | -8.0% | 1.9% | 1.2% | -89.9% | -48.2% |
| | CDR+RDODR | -8.3% | -8.2% | -11.0% | -10.1% | 0.7% | 0.4% | -89.9% | -48.2% |

SOTA (Full Transcoding, PRC-Full-PTQ)

Invention variants (PRC-Part-TQ)

**FIG. 11**

| | Europäisches Patentamt European Patent Office Office européen des brevets | **EUROPEAN SEARCH REPORT** | **Application Number** EP 24 29 0010 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHAN DE PRAETER ET AL: "Network-Distributed Video Coding", ARXIV.ORG, CORNELL UNIVERSITY LIBRARY, 201 OLIN LIBRARY CORNELL UNIVERSITY ITHACA, NY 14853, 12 January 2021 (2021-01-12), XP081857549, * the whole document * | 1-15 | INV. H04N19/30 H04N19/40 H04N19/426 H04N19/59 H04N19/91 |
| X | CHENG MING ET AL: "NDMP - An emerging MPEG standard for network distributed media processing", 2017 IEEE VISUAL COMMUNICATIONS AND IMAGE PROCESSING (VCIP), IEEE, 10 December 2017 (2017-12-10), pages 1-4, XP033325842, DOI: 10.1109/VCIP.2017.8305117 [retrieved on 2018-02-28] * the whole document * | 1-15 | |
| X | CHRISTOPHER HOLLMANN (ERICSSON) ET AL: "NDVC: CfE response from Ericsson", 120. MPEG MEETING; 20171023 - 20171027; MACAU; (MOTION PICTURE EXPERT GROUP OR ISO/IEC JTC1/SC29/WG11), , no. m41829 18 October 2017 (2017-10-18), XP030070171, Retrieved from the Internet: URL:http://phenix.int-evry.fr/mpeg/doc_end_user/documents/120_Macau/wg11/m41829-v1-m41829.zip m41829.docx [retrieved on 2017-10-18] * the whole document * | 1-15 | TECHNICAL FIELDS SEARCHED (IPC) H04N |

-/--

The present search report has been drawn up for all claims

| Place of search | Date of completion of the search | Examiner |
|---|---|---|
| Munich | 10 September 2024 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

**Application Number**

EP 24 29 0010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMUELSSON (ERICSSON) J ET AL: "Application examples, requirements, and results for network-distributed video encoding", 115. MPEG MEETING; 20160530 - 20160603; GENEVA; (MOTION PICTURE EXPERT GROUP OR ISO/IEC JTC1/SC29/WG11), , no. m38634 25 May 2016 (2016-05-25), XP030066986, Retrieved from the Internet: URL:http://phenix.int-evry.fr/mpeg/doc_end _user/documents/115_Geneva/wg11/m38634-v1- m38634.zip m38634.docx [retrieved on 2016-05-25] * the whole document * ----- | 1-15 | |

**TECHNICAL FIELDS SEARCHED (IPC)**

The present search report has been drawn up for all claims

| Place of search | Date of completion of the search | Examiner |
|---|---|---|
| Munich | 10 September 2024 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)